(19) Europäisches Patentamt
European Patent Office
Office européen des brevets

(11) Publication number: **0 135 272**
**B1**

(12) # EUROPEAN PATENT SPECIFICATION

(45) Date of publication of patent specification: **24.08.88**

(51) Int. Cl.$^4$: **C 09 B 45/24,** C 09 B 55/00, D 06 P 3/32

(21) Application number: **84304578.2**

(22) Date of filing: **04.07.84**

(54) **Metal complex compounds, their preparation and use.**

(30) Priority: **26.07.83 EP 83401532**

(43) Date of publication of application:
**27.03.85 Bulletin 85/13**

(45) Publication of the grant of the patent:
**24.08.88 Bulletin 88/34**

(84) Designated Contracting States:
**CH DE FR GB LI**

(56) References cited:
**EP-A-0 048 693**
**FR-A-1 466 877**
**FR-A-1 486 661**
**FR-A-2 219 964**
**US-A-4 123 429**
**US-H- 383 697**

**The file contains technical information submitted after the application was filed and not included in this specification**

(73) Proprietor: **I.C.I. FRANCOLOR S.A.**
**8 Avenue Reaumur Boîte Postale 207**
**F-92142 Clamart Cedex (FR)**

(72) Inventor: **Durant, Marcel**
**20 rue Erik Satie**
**F-76240 Le Mesnil Esnard (FR)**
Inventor: **Ficht, Paulette**
**4 rue du Cotentin**
**F-76130 Mont Saint-Aignan (FR)**
Inventor: **Graindor, Alain**
**12 rue Zemenhof**
**F-76300 Sotteville-les-Rouen (FR)**
Inventor: **Morel, Patrice**
**2 Residènce du Calvaire**
**F-76520 Gouy (FR)**
Inventor: **Saye, Beatrice**
**132 rue du Renard**
**F-76000 Rouen (FR)**
Inventor: **Tournant, Paul**
**23 rue des Pruniers**
**F-76410 Saint-Aubin les Elbeuf (FR)**

(74) Representative: **Ricks, Michael James et al**
**Imperial Chemical Industries PLC Legal Department: Patents PO Box 6 Bessemer Road Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 135 272 B1

Courier Press, Leamington Spa, England.

**Description**

This invention relates to metal complex compounds, their preparation and use, and in particular to metal complex compounds suitable for the colouring of natural and synthetic nitrogenous materials.

It is known, from French Patent No 1,466,877, to make 1:1 cobalt complexes of mono- and poly-azo dyes in which the cobalt is also attached to a colourless ligand through nitrogen atoms and to use these for the coloration inter alia of leather. It is known from French Patent No 1,468,661 to make and use 1:1 chromium complexes of azo dyes in which the chromium is also attached to three nitrogen atoms, which preferably form part of a single colourless ligand. It is known from French Patent No 2,219,964 to make and use water-soluble 1:1 chromium complexes of monoazo dyes for the coloration of polyamides.

A new class of 1:1 chromium complex dyes has now been found which show a surprising balance of good penetration into the centre of the leather combined with excellent affinity for the leather, good tinctorial properties, brightness of shade and even coloration, excellent general fastness and high resistance to migration into pvc plastics (with which dyed leather may come into contact) when compared with the known metal complexes.

According to the present invention there is provided a metal complex compound of the formula:

$$(1) \quad \left(\begin{matrix} Z \\ | \\ Y{\equiv}Cr{=}L \end{matrix}\right)^{0/-} \quad \text{or} \quad L{=}\left(\begin{matrix} Z \\ | \\ Cr{\equiv}Y'{\equiv}Y'' \end{matrix}\right)^{0/-} \quad (2)$$

wherein:

Y is the residue of a metallisable polyazo or polyazo-azomethinic dyestuff;

Y' is the residue of a metallisable polyazo or polyazo-azomethinic dyestuff capable of being metallised twice;

L is a bidentate chelating agent selected from beta-diketones, 1:2-diols, 1:3-diols, ortho-hydroxy-aldehydes, peri-hydroxyquinones, beta-hydroxycarboxylic acids and o-diphenols;

Z is a neutral monofunctional ligand;

$$Y'' \text{ is } \begin{matrix} Z \\ | \\ Cr{=}L \end{matrix} \text{ or } Cr{\equiv}X; \text{ and}$$

X is the residue of metallisable azo or azo-methinic dyestuff.

The term 'polyazo dyestuff' as used herein means a dyestuff having two or more azo linkages in the molecule. Similarly the term 'polyazo-azomethinic' as used herein means a dyestuff having at least one azomethinic linkage (—N=CH—) together with one or more azo linkages.

A mixture of the bidentate chelating agents represented by L may be used if desired. In general such agents have two functions capable of undergoing covalent or coordinate links with chromium, thus forming with the chromium a stable five or six membered ring. Especially suitable bidentate chelating agents, L, are acetyl acetone, benzoyl acetone, glycerol and gaiacol (2-methoxyphenol).

Metallisable polyazo or polyazo-azomethinic dyes forming the residue Y generally have two metallisable functions capable of chelating with chromium (for example —OH, —$NH_2$, —COOH, and in situations where it may act as a leaving group, $OCH_3$) in a position ortho to at least one azo or azomethinic linkage. The residue ≡Y is thus joined to the metal atom by three linkages, one from the azo (or azomethinic) linkage and the two from the metallisable functions respectively. The dyes forming the residue Y' have two such groupings to permit it to be metallised twice. It is to be understood that a polyazo or polyazo-azomethinic dye which is capable of being metallised twice may be used to form a metal complex compound of formula (2) or may be metallised once only to form a metal complex compound of formula (1).

The dyes forming the residue Y or Y' may be prepared according to the methods disclosed in the various specific references given below, or may be prepared by known general methods, for example, the methods described in "Azo and diazo chemistry aliphatic and aromatic compounds" by H. Zollinger, Interscience Publishers, 1961.

As metallisable polyazo dyes there may be mentioned dyes obtained by multiple coupling reactions, for example:—

(a) Dyes of formula:—

$$A{-}N{=}N{-}\underset{\displaystyle T}{\underset{|}{B}}{-}N{=}N{-}C \qquad (3)$$

including those mentioned in French Patent No. 2,267,349 (Sandoz), French Patent No. 2,465,769 (Sandoz) and European Patent No 73950 (Bayer), wherein:

A represents the residue of a diazotisable base or of a diazotisable azo dyestuff, having in a position ortho to the azo linkage a chelating group —OH, —$NH_2$, —COOH, (or, in situations where it may act as a leaving group, —$OCH_3$);

B is a coupling component having at least two coupling sites (for example resorcinol or meta phenylendiamine) and one or more chelating groups —OH, —$NH_2$, or —COOH in a position ortho to at least one azo linkage;

C represents the residue of a diazotisable base or of a diazotisable azo dyestuff, optionally having in a position ortho to the azo linkage a chelating group —OH, —$NH_2$, —COOH, or —$OCH_3$; and

T is H or —N=N—D where D has the same definition as C above.

(b) dyes of the formula:—

A'—N=N—B'—N=N—C' (4)

such as are mentioned in German Patent No 2,832,756 (Sandoz) or European Patent No 37377 (Ciba Geigy) in which:—

A' is the residue of a diazotisable base or of a diazotisable azo dyestuff, optionally having in a position ortho to the azo linkage a chelating group —OH, —$NH_2$, —COOH or —$OCH_3$;

B' is the residue of a coupling component having at least one —$NH_2$ group capable of undergoing diazotisation (for example H Acid), and having in a position ortho to at least one azo linkage a chelating group —OH, —COOH or —$NH_2$; and

C' is the residue of a coupling component, which can itself be an azo dyestuff, optionally having in a position ortho to at least one azo linkage a chelating group —OH, —COOH or —$NH_2$;

(c) dyes of the formula:—

```
      N=N—B''—N=N—C''
     /
A''                          (5)
     \
      N=N—D''
```

for example dyes of the type mentioned in French Patent No 2,451,389 (Sandoz) but metallisable once or twice wherein

A'' is the residue of tetra-azotisable amine, optionally having in a position ortho to each (or to one) azo linkage, 1 or 2 chelating groups —OH, —COOH, —$NH_2$, or —$OCH_3$;

B'' is the residue of a coupling component, optionally having an amine function which is capable of being diazotised, and an chelating group, —OH, —$NH_2$, or —COOH, in a position ortho to the azo linkage with the tetra-azotisable amine, or B'' is the residue of a coupling component which is already joined by an azo or azomethine linkage to the group C'' (as defined below) and optionally having in a position ortho to the linkage with C'' a chelating group —OH, —COOH or —$NH_2$;

when B'' has a —$NH_2$ group capable of being diazotised, C'' is the residue of a coupling agent having, in a position ortho to the azo linkage with B'', a chelating group —OH, —COOH or —$NH_2$; or

when B'' is a coupling component having at least two positions of coupling, C'' is the residue of a diazotisable amine; and

D is optionally identical to the grouping B''—N=N—C''; or

D'' is the residue of a coupling component optionally having in a position ortho to the azo linkage a chelating group —OH, —COOH or —$NH_2$.

As examples of dyestuffs of formula (3) there may be mentioned for example those polyazo dyes described in Examples 1 to 8, 13 to 31, 37 to 39 and 48 to 63.

As examples of dyestuffs of formula (4) there may be mentioned for example those dyes described in Examples 32 to 36:—

As examples of dyestuffs of formula (5) there may be mentioned for example those dyes described in Examples 40 to 43 and Example 46.

It is to be understood that the polyazo dyes which may be used to form the residue ≡Y or ≡Y' in the present invention are not limited to those of formulae (1) to (5) above which are intended merely to describe the major types of polyazo dyestuffs which may be used.

Certain of the above dyestuffs (for example those described in Examples 13/14, 15/16 and 17/18) have two or more metallisable sets of groupings. These dyestuffs may either be metallised once to give a metal complex compound of formula (1) or may be metallised twice to give a metal complex compound of formula (2). The product formed may be readily controlled by the proportions of the metallising agent used in the manufacture. The choice of whether the dyestuff is to be metallised once to give a metal complex of formula (1) or twice to give a metal complex of formula (2) will depend on the particular balance of properties required in the product.

As examples of polyazo-azomethinic dyestuffs which may be used in the metal complex compounds of the present invention there may be mentioned those disclosed in Brazilian patent 7902515 (Ciba-Geigy), European patent 18939 (Ciba-Geigy) and European patent 43794 (Ciba-Geigy), for example the dyestuff disclosed in Example 47.

The neutral monofunctional ligand Z is preferably ammonia or an organic base, for example aliphatic or aromatic amines or heterocyclic bases. Preferred organic bases are pyridine, ethylamine and ethanolamine. It is to be understood that when the neutral monofunctional ligand is ammonia or an organic base and is incorporated into the metal complex in aqueous solution or in the presence of water, water itself may act as the neutral monofunctional ligand. Thus the present invention includes a mixture of metal complex compounds of formula (1) (or (2)) wherein (a) Z represents ammonia or an organic base and (b) wherein Z represents water. Indeed in certain circumstances the neutral monofunctional ligand Z may be relatively labile and may undergo exchange reactions with water during the course of the dyeing process or when the metal complex compound is dissolved in water.

When X in formula (2) above represents the residue of a metallisable azo or azomethinic dyestuff, the dyestuff may be any of the metallisable azo or azomethinic dyestuffs such as are well known in the art, for example those azo or azomethinic dyes listed in Example 64. If desired the azo or azomethinic dyestuff forming the residue X may be selected with a view to modifying the shade of the metal complex compound. The term azo or azomethinic dyestuff as used to describe X includes a polyazo or polyazo-azomethinic dyestuff.

The metal complex compounds of the present invention are suitably used in aqueous solution for the dyeing of the natural or synthetic nitrogenous material, for example leather. To ensure sufficient solubility of the metal complex compound in water, it is preferred to use polyazo or polyazo-azomethinic dyestuffs (Y and Y') and azo or azomethinic dyestuffs (X) (if used) such that the metal complex compound as a whole contains at least one sulphonic acid group. An excessive number of sulphonic acid groups may make the metal complex compound too soluble to isolate readily and may adversely affect the affinity of the metal complex compound for leather. It is therefore preferred that the metal complex compound has from 1 to 5 sulphonic acid groups. From 1 to 3 sulphonic acid groups are especially preferred.

The charge on the metal complex compound of formula (1) or (2) is shown as 0 or −. This is assuming that any sulphonic acid groups present are in the free acid form. The charge on the complex depends on the nature of the bidentate chelating agent L. Chelating agents such as acetyl acetone which coordinate with the chromic ion with one covalent and one coordinate link as shown in the formula of Example 1 form a neutral complex. Chelating agents such as glycerol which can coordinate with the chromic ion via two covalent links form a negatively charged metal complex compound.

The metal complex compounds of the present invention may be prepared by reaction of the bidentate chelating agent (or mixture of chelating agents), L, with the cationic 1/1 chromium complex of the polyazo or polyazo-azomethinic dyestuff forming the residue Y or Y', in the presence of the neutral monofunctional ligand Z, and preferably in the presence of ammonia or an organic base. The reaction conveniently takes place in an aqueous medium.

The reaction may take place with or without isolation of the cationic 1/1 metal complex of chromium. The dyestuff forming the residue Y (or Y') in formula (1) (or (2)) may be metallised using conventional chromating or cobalting agents to form the 1/1 complex with one (or two) metal atoms. (i.e. in a complex of formula (2) the 1/1 complex has one metal atom for each metallisable polyazo or azomethenic linkage).

For metal complex compounds of formula (2) in which X is the residue of a metallisable azo or azomethinic dyestuff, the bidentate chelating agent may be added either before or after the condensation of one of the two metal atoms with the azo or azomethinic dyestuff (X). This reaction preferably takes place at a temperature in the range of from 20 to 100°C, and in the presence of excess ammonia or organic base.

The metal complex compounds of the present invention may be used in form of a solution in water. In general there is no necessity to use any additives, but conventional additives may be used if desired.

The metal complex compounds of the present invention may be used to colour natural and synthetic nitrogenous materials to which they may be applied using conventional techniques and pretreatments. They are especially suitable for the dyeing of leather for which they show superior and valuable properties. In particular, and in contrast to the 1/1 and 1/2 metal complex compounds of the prior art, they show a surprising balance of good penetration into the centre of the leather combined with an excellent affinity for the leather and good tinctoral strength.

The metal complex compounds of the present invention also provide bright shades and even colouration. They show excellent general fastness and in particular are highly resistant to migration into pvc plastics with which the dyed leather may come into contact.

The invention is illustrated by the following Examples in which all parts and percentages are by weight unless otherwise stated.

Example 1

2-Aminobenzoic acid (137 parts) was suspended in 1000 parts of water and 205 parts of 10N hydrochloric acid and was diazotised at 0°C using 140 parts of a 50% solution of sodium nitrite. The reaction mixture was stirred for half an hour and the solution of the diazo compound formed, which was maintained at 0°C, was poured in the course of 2 hours into a solution of 110 parts of 1,3-dihydroxybenzene in 2000 parts of water and 224 parts of 10N sodium hydroxide whilst the pH was maintained at 12 by the addition of further sodium hydroxide. The mixture was stirred for 1 hour and then acidified to pH 5.9 by the addition of 395 parts of 5N hydrochloric acid. The solid precipitating was filtered and there was obtained 1240 parts of a paste of a monoazo compound (I).

4-Amino-3-methylbenzene-1-sulphonic acid (183 parts) was suspended in 2900 parts of water and 230 parts of 10N hydrochloric acid and was diazotised at 0°C using 136 parts of a 50% solution of sodium nitrite. The mixture was stirred for half an hour and the resultant suspension of the diazotised product was poured in the course of 1½ hours into a solution of 1240 parts of the monoazo compound (I) in 1950 parts of water and 232 parts of 10N sodium hydroxide, whilst the temperature was maintained at between 5 and 10°C and the pH was maintained at 10 by the addition of sodium hydroxide. The product was salted out and filtered, to give 936 parts of a paste of a polyazo dyestuff (II).

The polyazo dyestuff (II) (936 parts) was reacted in 2750 parts of water and 68 parts of 94% sulphuric acid with 260 parts of basic chromium sulphate containing 18% chromium 3+ ion. The reaction took place at 145°C over 12 hours. After cooling, the product was filtered to give 783 parts of a paste (III).

The resultant 783 parts of the paste (III) were redissolved in 1500 parts of water and warmed to 70°C. 56 Parts of acetylacetone were added, and the pH was adjusted to 7 with the addition of 124 parts of 10N ammonia. The mixture was stirred for 5 hours at 65°C. The product was salted out, filtered and dried.

There was obtained 507 parts of a metal complex product in the form of the free acid, and having the formula:—

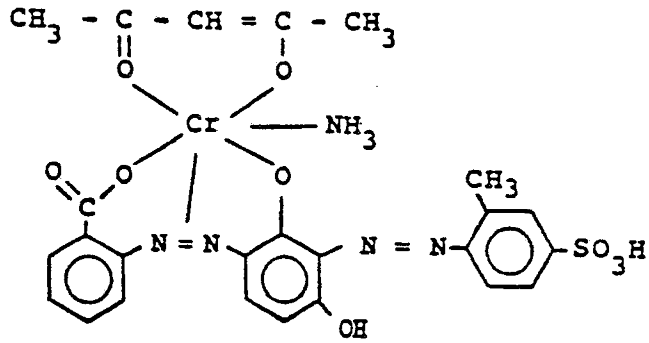

The product coloured leather in brown shades having good fastness and a good penetration of the leather.

## Example 2

The 124 parts of ammonia in Example 1 were replaced by pyridine and a product was obtained having the formula:—

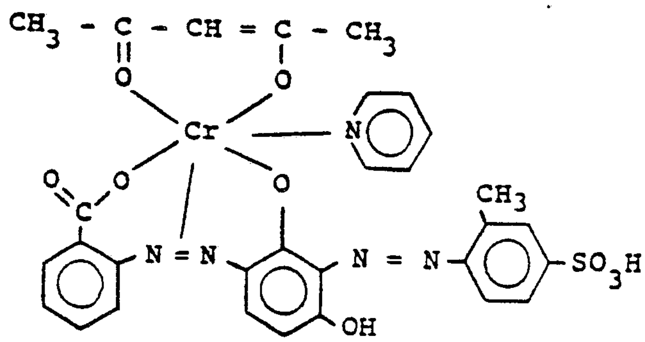

## Example 3

If the Example 1 is repeated using ethanolamine in place of ammonia, a corresponding metal complex compound may be obtained.

## Examples 4 to 6

If in Example 1, the acetylacetone is replaced by the bidentate chelating agents shown in the following table, corresponding metal complex compounds may be obtained:—

| Example No | Bidentate Chelating Agent | Shade |
|---|---|---|
| 4 | 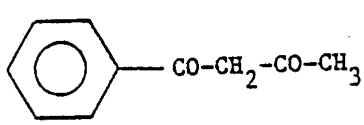 | brown |
| 5 | $CH_3$—CHOH—$CH_2OH$ | brown |
| 6 | $CH_2OH$—CHOH—$CH_2OH$ | brown |

Example 7

4-Nitro-6-sulpho-3-aminophenol (23.4 parts) was suspended in 150 parts of water and 13 parts of 10N hydrochloric acid and was diazotised at 0°C using 14 parts of a 50% solution of sodium nitrite. The reaction mixture was stirred for half an hour and the solution of the diazo compound formed, which was maintained at 0°C, was poured during the course of 2 hours into a solution of 12 parts of 1,3-dihydroxybenzene in 150 parts of water and 5.5 parts of 10N sodium hydroxide whilst the pH was maintained at 10 by the addition of 10N sodium hydroxide. The mixture was stirred for 1 hour and then acidified to pH 5.3 by the addition of 38 parts of 5N hydrochloric acid. The solid salted out was filtered and there was obtained 109 parts of a paste of a monoazo compound (I).

2-sulpho-4,4'-diaminodiphenylamine (13 parts) was suspended in 200 parts of water and 38 parts of 10N hydrochloric acid and was diazotised at 0°C using 14 parts of a 50% solution of sodium nitrite. The mixture was stirred for half an hour and the resultant suspension of the diazotised product was poured very rapidly into a suspension of 109 parts of the monoazo compound (I) in 300 parts of water and 29 parts of a 20% solution of sodium hydroxide. The pH was adjusted to 9.5 by the addition of sodium carbonate, and the mixture was stirred for 3 hours, whilst the pH was maintained at 9.5 by the addition of sodium carbonate. The product was filtered to give 330 parts of a paste of a polyazo dyestuff (II).

The polyazo dyestuff (II) (330 parts) was reacted in 350 parts of water and 19.3 parts of 94% sulphuric acid with 64 parts of basic chromium sulphate containing 18% chromium 3+ ion. The reaction took place at 145°C over 8 hours. After cooling, the product was salted out and filtered to give 700 parts of a paste (III).

The resultant 700 parts of the paste (III) were redissolved in 250 parts of water and warmed to 70°C. 22 Parts of acetylacetone were added, and the pH was adjusted to 8.5 with the addition of 10N ammonia. The mixture was stirred for 5 hours at 65°C. At the end of the reaction the mixture was cooled, and the product was salted out, filtered and dried.

There was obtained 500 parts of a metal complex product in the form of the free acid, and having the formula:—

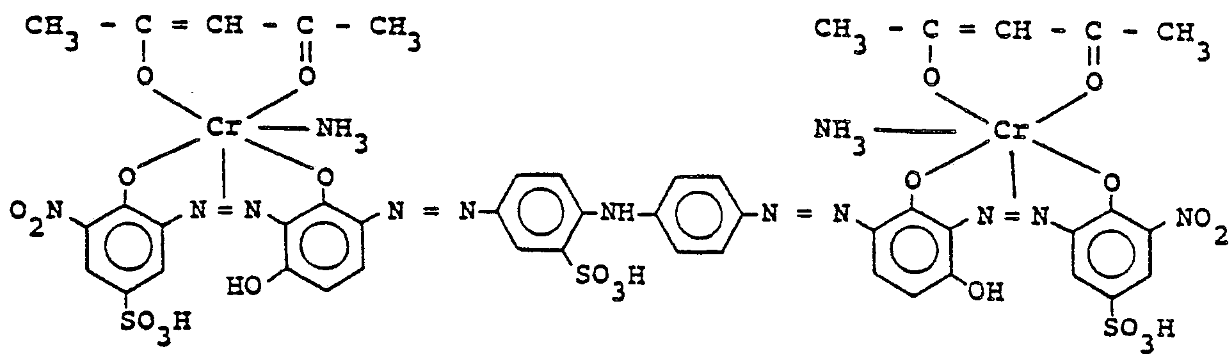

The product coloured leather in a brown-violet shade having a good stability, and showing good penetration.

Example 8

0.1 Moles (101.1 parts) of the polyazo dyestuff (II) of Example 7 above were made into a paste with 400 cm$^3$ of diethylene glycol. There was then added 0.210 moles (60.6 parts) of a solution on chromic chloride containing 18% chromic ion. The mixture was heated rapidly to 120 to 125°C and was maintained at this temperature for 10 hours. The end point of the metallisation was controlled by chromatography and electrophoresis. When metallisation was complete, the mixture was cooled to 65°C and there was added 0.210 moles (22 parts) of acetylacetone followed immediately by 10N ammonia until the pH reached 8.5. The temperature was maintained at 65°C until the condensation was complete. The mixture was poured onto salt water, the pH was adjusted to 7 to 7.5 with 40% acetic acid and the product was filtered. The product, which was the same as that prepared using the method of Example 7, was dried and a dark brown powder was obtained which dyed leather in brown-violet shades.

Using the general methods described in Examples 1 to 8, metal complex compounds according to the invention were prepared using the polyazo or polyazo-azomethinic dye, the chelating bidentate ligand (L), the monofunctional ligand Z and the chromium or cobalt metal as indicated in Table 1. Where the metal is indicated in Table I as, for example, Cr, the metal complex is of formula (1). When the metal is indicated as, for example, 2Cr, the metal complex is metallised twice as in formula (2), there being used 2 molecules of L and of Z (i.e. ≡X in formula (2) represents the two groups =L and −Z).

Table 1

| Example | Polyazo or Polyazo-azomethinic dyestuff | Metal | L | Z |
| --- | --- | --- | --- | --- |
| 9 | 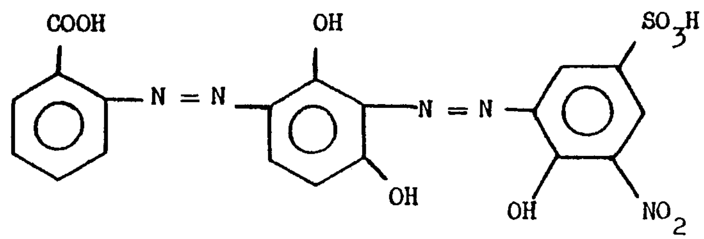 | Cr | Acetylacetone | $NH_3$ |
| 10 | 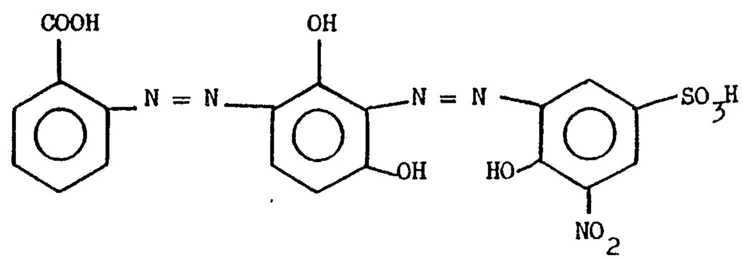 | 2Cr | 2 acetyl acetone | 2 $NH_3$ |
| 11 | 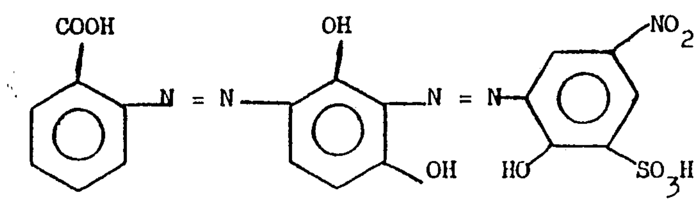 | Cr | Acetylacetone | $NH_3$ |

Table 1

| Example | Polyazo or Polyazo-azomethinic dyestuff | Metal | L | Z |
|---|---|---|---|---|
| 12 | 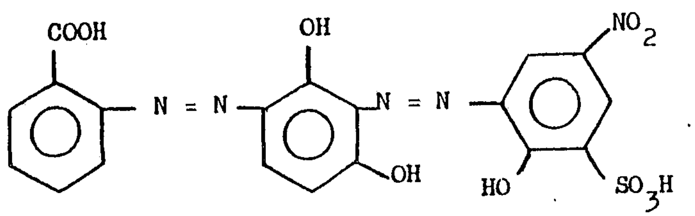 | 2Cr | 2 acetyl acetone | 2 $NH_3$ |
| 13 | 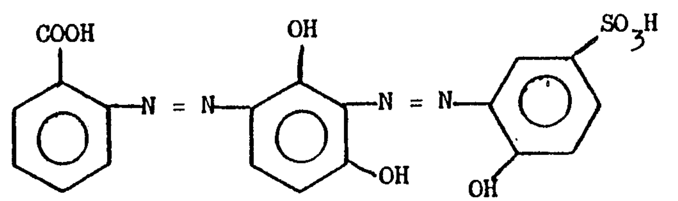 | Cr | acetylacetone | pyridine |
| 14 | " | 2Cr | 2 acetyl acetone | 2 $NH_3$ |
| 15 | 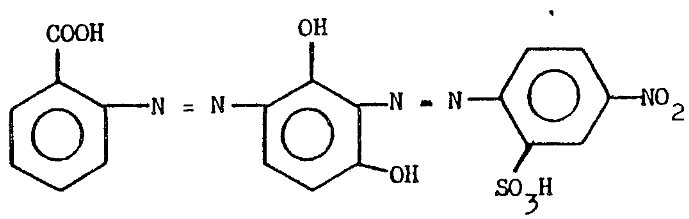 | Cr | acetylacetone | $NH_3$ |

Table 1

| Example | Polyazo or Polyazo-azomethinic dyestuff' | Metal | L | Z |
| --- | --- | --- | --- | --- |
| 16 | 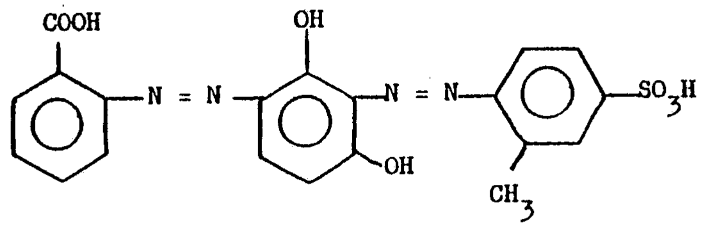 | Cr | Acetylacetone | $NH_3$ |
| | | | | |
| 17 | 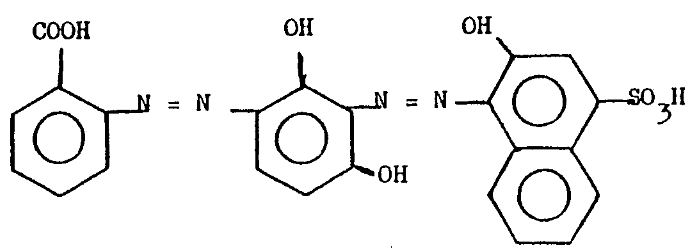 | Cr | acetylacetone | $NH_3$ |

Table 1

| Example | Polyazo or Polyazo-azomethinic dyestuff | Metal | L | Z |
|---|---|---|---|---|
| 18 | 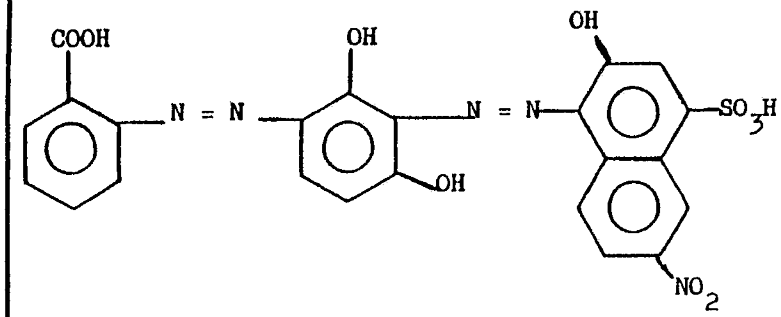 | Cr | acetylacetone | $H_2O$ |
| 19 | 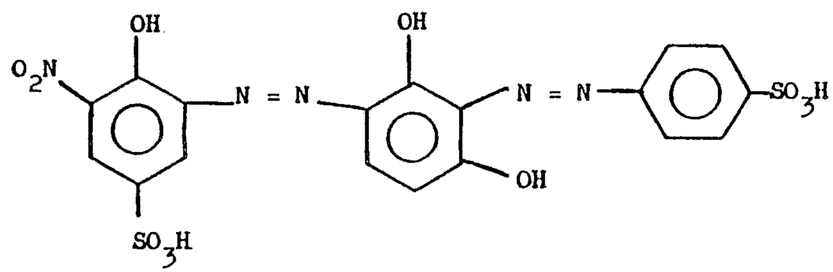 | Cr | $CH_2-CH-CH_2OH$ (with OH under $CH_2$ and OH under CH) | $NH_3$ |
| 20 | 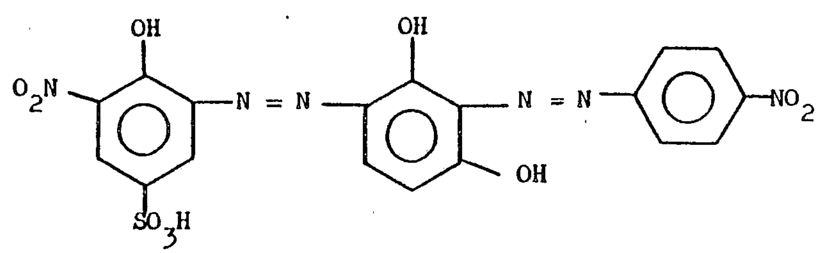 | Cr | acetylacetone | $H_2O$ |

**Table 1**

| Example | Polyazo or Polyazo-azomethinic dyestuff | Metal | L | Z |
|---|---|---|---|---|
| 21 | 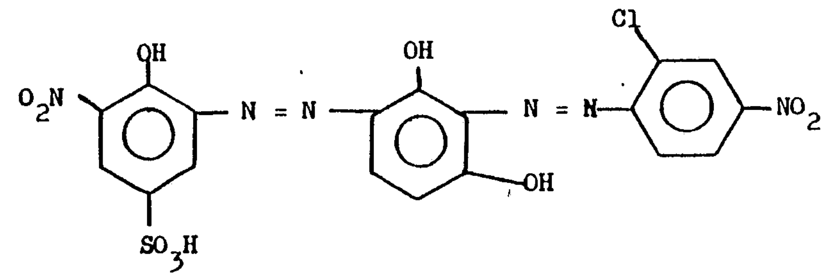 | Cr | acetylacetone | pyridine |
| 22 | 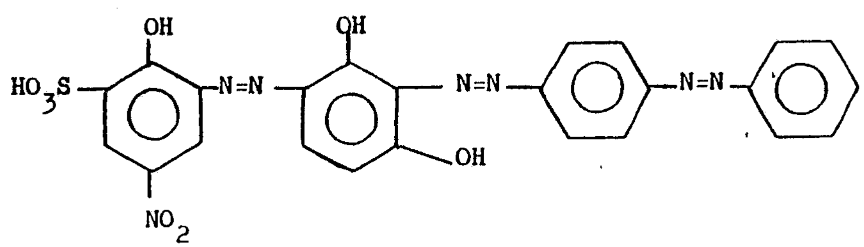 | Cr | acetylacetone | $NH_3$ |
| 23 | 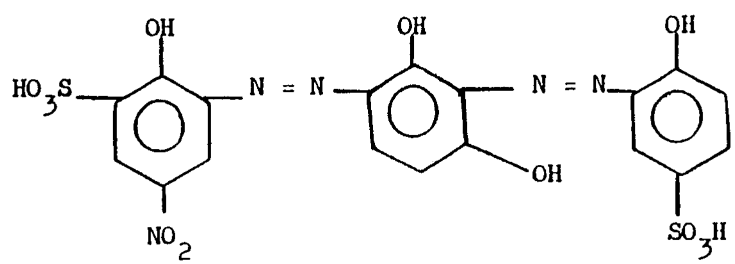 | Cr | acetylacetone | $NH_3$ |

Table 1

| Example | Polyazo or Polyazo-azomethinic dyestuff | Metal | L | Z |
|---|---|---|---|---|
| 24 | 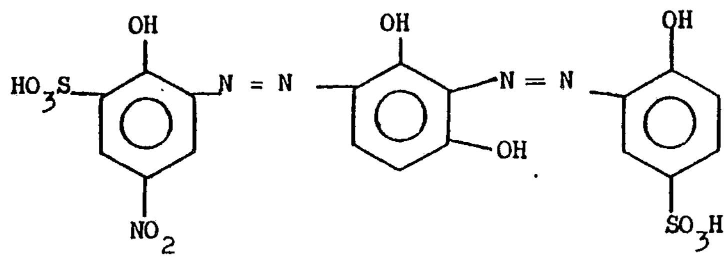 | 2Cr | 2 acetyl acetone | 2 $NH_3$ |
| 25 | 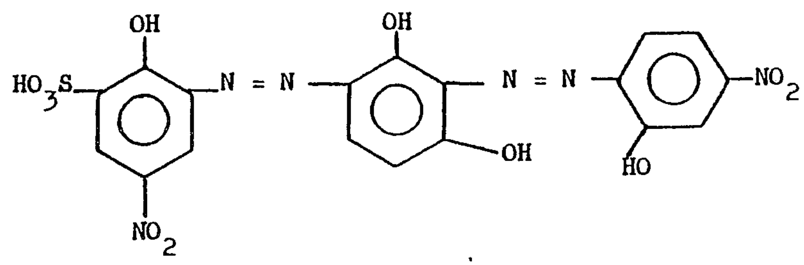 | Cr | acetylacetone | $NH_3$ |
| | | | | |

Table 1

| Example | Polyazo or Polyazo-azomethinic dyestuff | Metal | L | Z |
|---|---|---|---|---|
| 26 | 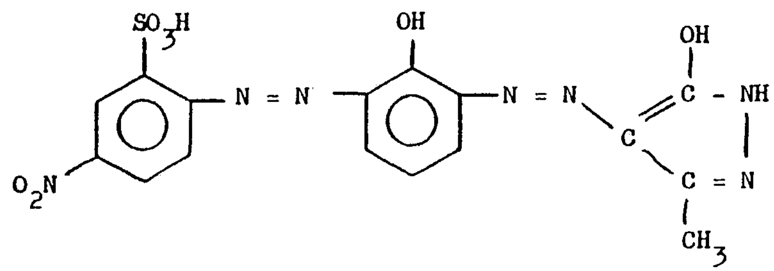 | Cr | acetylacetone | $NH_3$ |
| 27 | 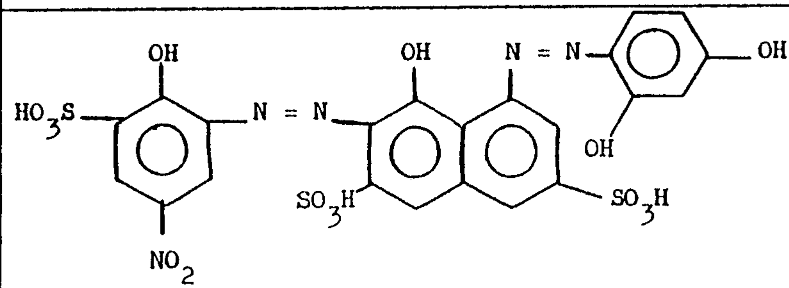 | Cr | acetylacetone | $NH_3$ |
| 28 | 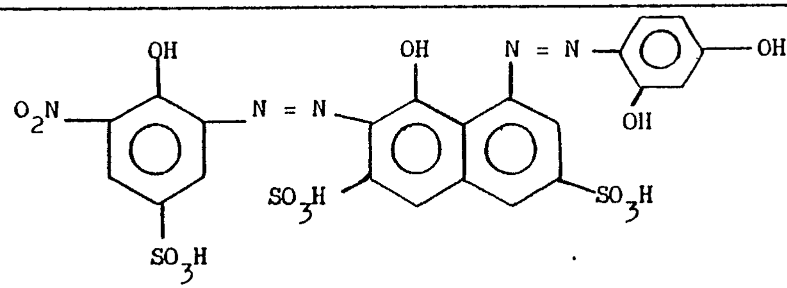 | Cr | acetylacetone | $NH_3$ |

Table 1

| Example | Polyazo or Polyazo-azomethinic dyestuff | Metal | L | Z |
|---|---|---|---|---|
| 29 | 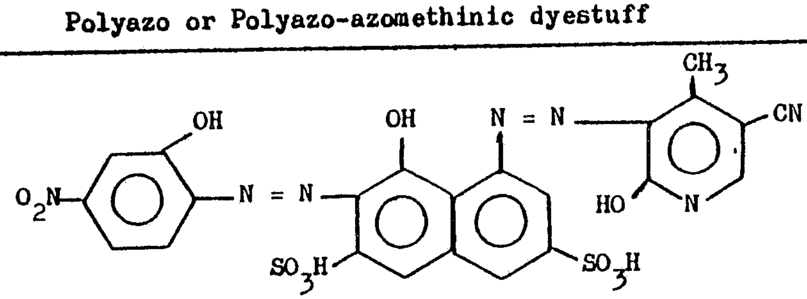 | Cr | acetylacetone | $NH_3$ |
| 30 | 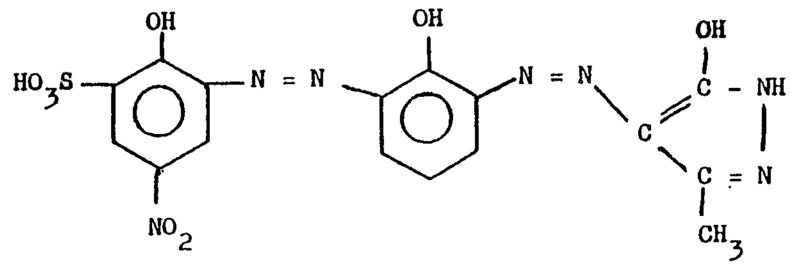 | Cr | acetylacetone | $H_2O$ |
| 31 | 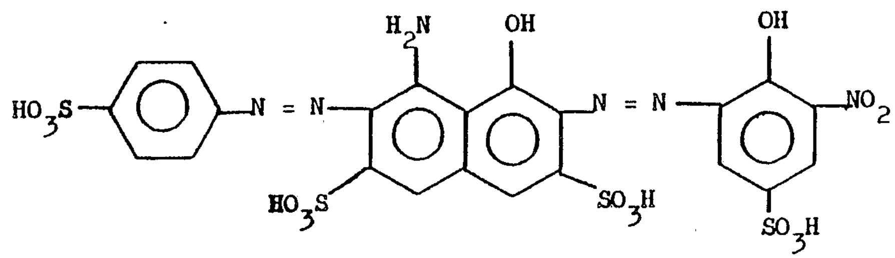 | Cr | acetylacetone | pyridine |

Table 1

| Example | Polyazo or Polyazo-azomethinic dyestuff | Metal | L | Z |
|---|---|---|---|---|
| 32 | 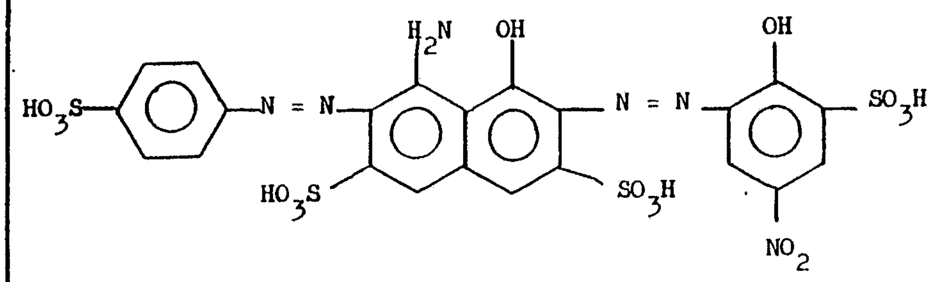 | Cr | acetylacetone | $NH_3$ |
| 33 | 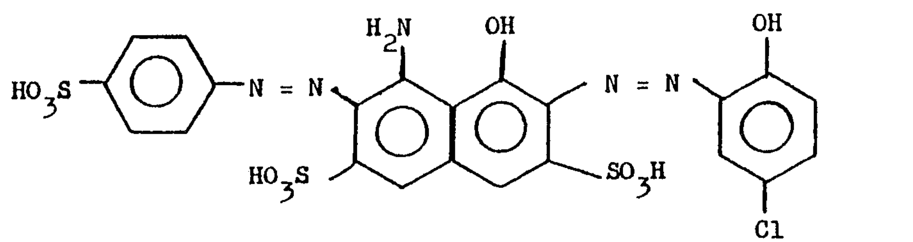 | Cr | acetylacetone | $NH_3$ |
| 34 | 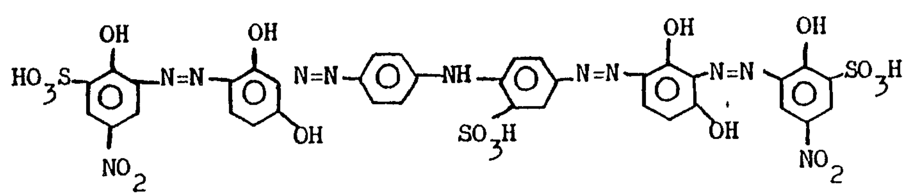 | 2Cr | 2 acetyl acetone | 2 $NH_3$ |

Table 1

| Example | Polyazo or Polyazo-azomethinic dyestuff | Metal | L | Z |
|---|---|---|---|---|
| 35 | 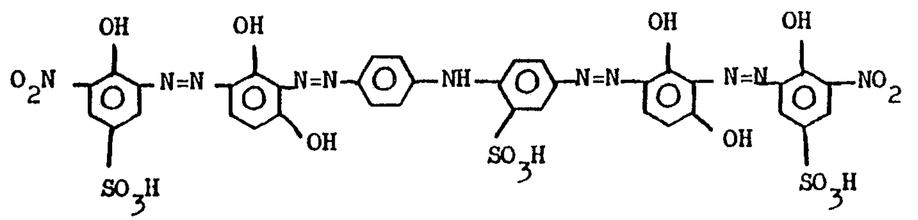 | 2Cr | 2 acetyl acetone | 2 $NH_3$ |
| 36 | 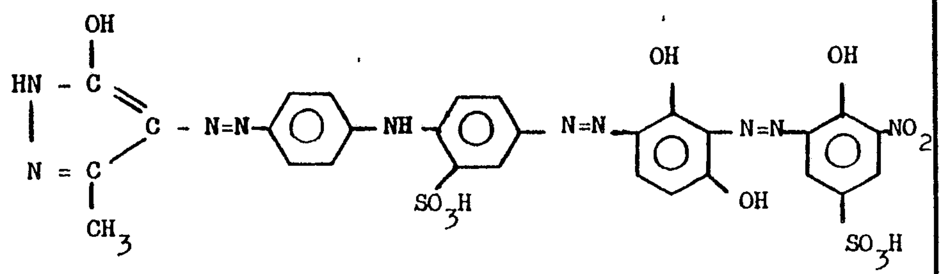 | Cr | acetylacetone | $NH_3$ |
| 37 | 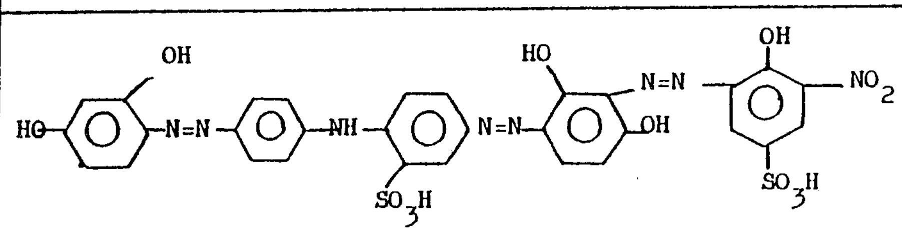 | Cr | acetylacetone | $NH_3$ |

Table 1

| Example | Polyazo or Polyazo-azomethinic dyestuff | Metal | L | Z |
|---|---|---|---|---|
| 38 | 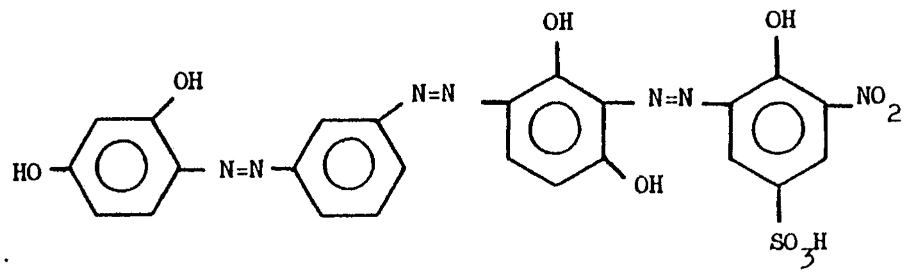 | Cr | acetylacetone | $NH_3$ |
| 39 | 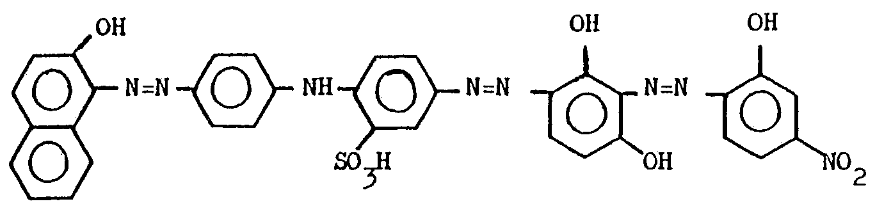 | Cr | acetylacetone | $H_2O$ |
| 40 | 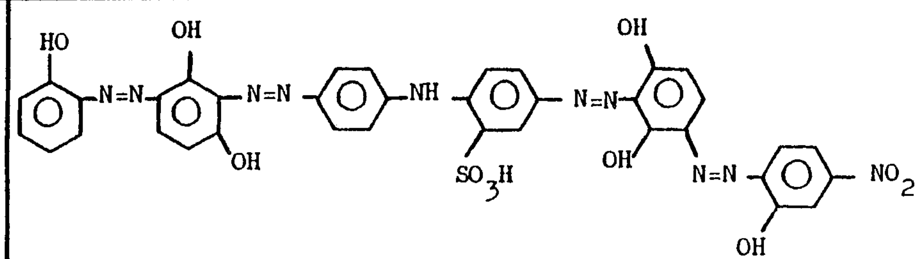 | 2Cr | 2 acetyl acetone | 2 $NH_3$ |

Table 1

| Example | Polyazo or Polyazo-azomethinic dyestuff | Metal | L | Z |
|---|---|---|---|---|
| 41 | 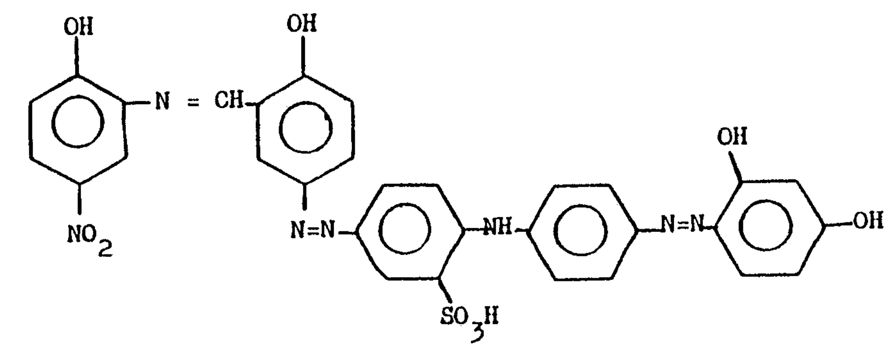 | Cr | acetylacetone | $NH_3$ |
| 42 | 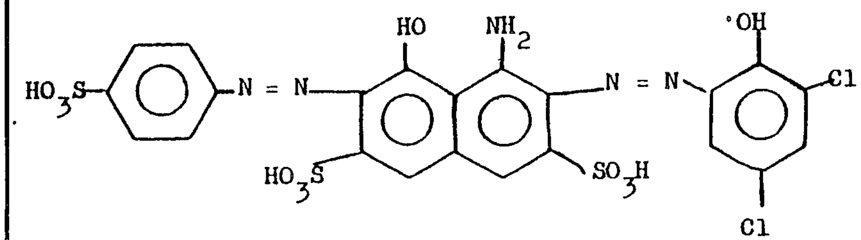 | Cr | acetylacetone | $H_2O$ |
| 43 | 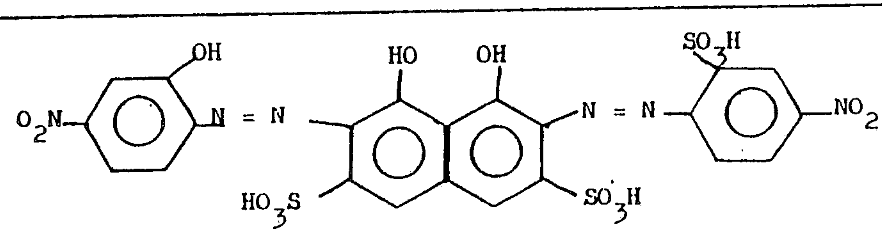 | Cr | acetylacetone | $NH_3$ |

Table 1

| Example | Polyazo or Polyazo-azomethinic dyestuff | Metal | L | Z |
|---|---|---|---|---|
| 44 | 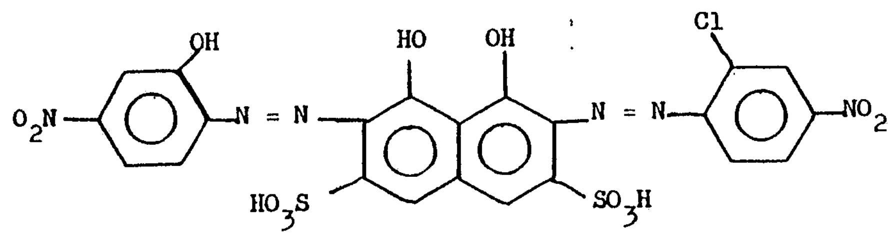 | Cr | acetylacetone | $NH_3$ |
| 45 | 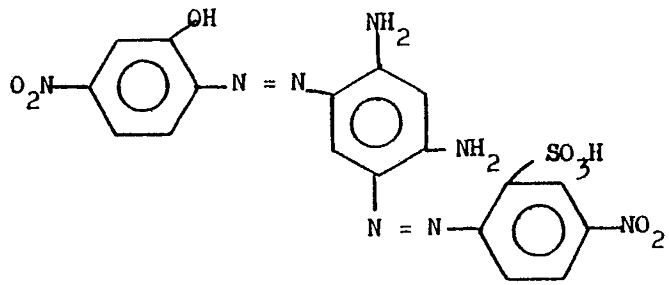 | Cr | acetylacetone | $NH_3$ |
| | | | | |

Table 1

| Example | Polyazo or Polyazo-azomethinic dyestuff | Metal | L | Z |
|---|---|---|---|---|
| 46 | 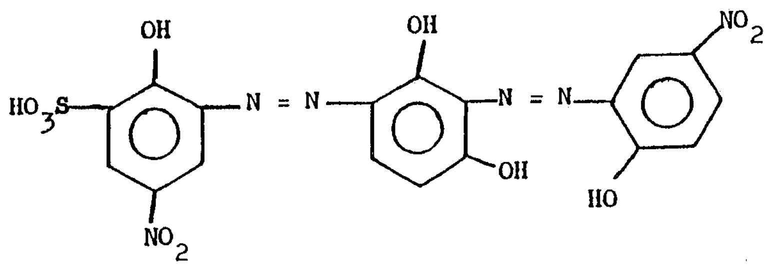 | Cr | acetylacetone | $NH_3$ |
| 47 | 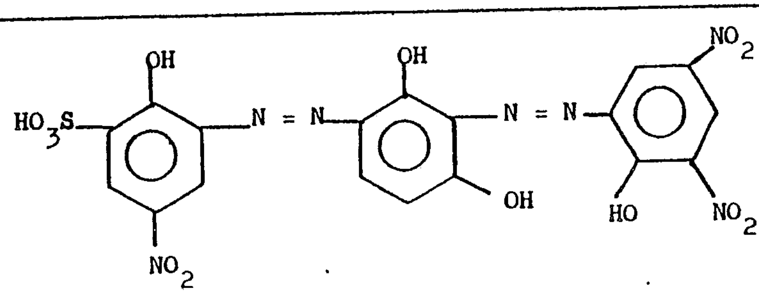 | Cr | acetylacetone | pyridine |
| 48 | 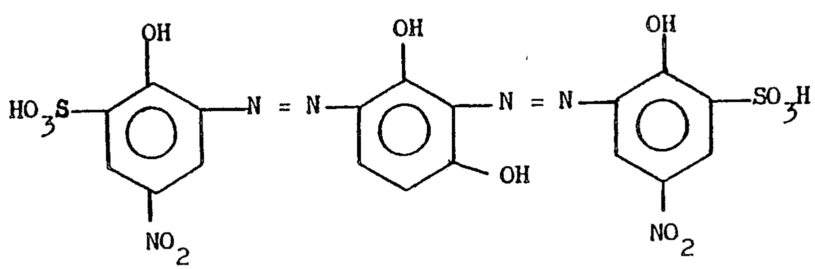 | 2Cr | 2 acetyl acetone | 2 $NH_3$ |

Table 1

| Example | Polyazo or Polyazo-azomethinic dyestuff | Metal | L | Z |
|---|---|---|---|---|
| 49 | 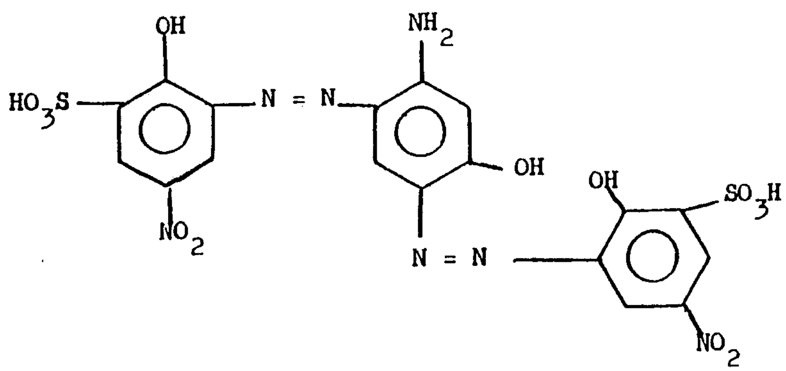 | 2Cr | 2 acetyl acetone | $NH_3$ |
| 50 | 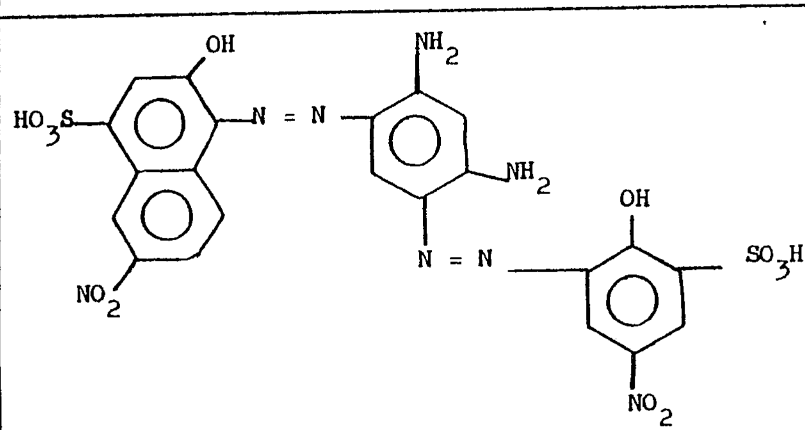 | 2Cr | 2 acetyl acetone | pyridine |

Table 1

| Example | Polyazo or Polyazo-azomethinic dyestuff | Metal | L | Z |
|---|---|---|---|---|
| 51 | 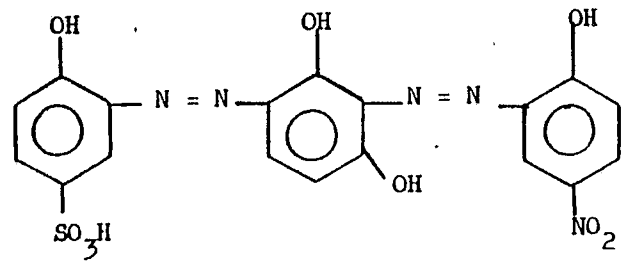 | 2Cr | 2 acetyl acetnne | $NH_3$ |
| 52 | 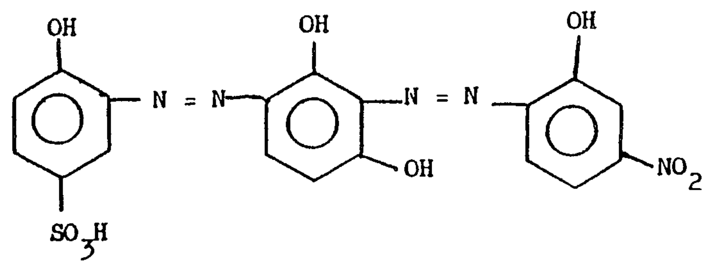 | 2Cr | 2 acetyl acetone | pyridine |
| 53 | 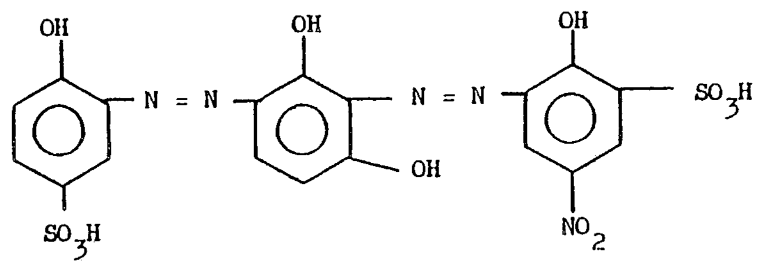 | 2Cr | 2 acetyl acetone | $NH_3$ |

**Table 1**

| Example | Polyazo or Polyazo-azomethinic dyestuff | Metal | L | Z |
|---|---|---|---|---|
| | | | | |
| 54 | 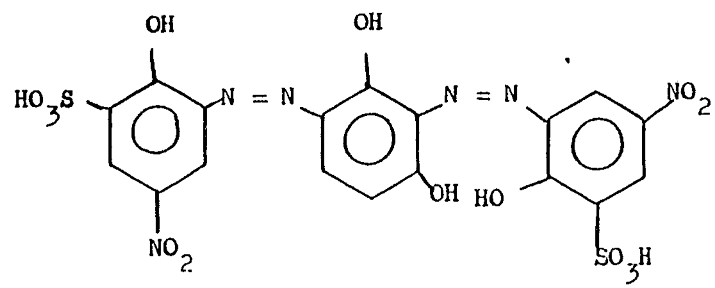 reddish-brown | 2Cr | 2 Glycerol | $2NH_3$ |
| 55 | 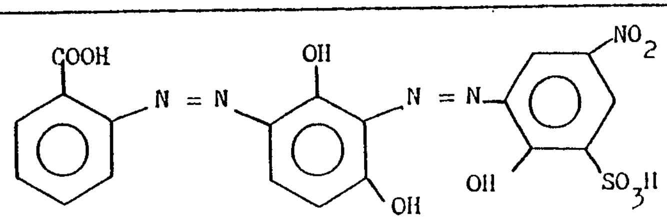 reddish-brown | 2Cr | 2 Glycerol | $2NH_3$ |

**Table 1**

| Example | Polyazo or Polyazo-azomethinic dyestuff | Metal | L | Z |
|---|---|---|---|---|
| 56 | 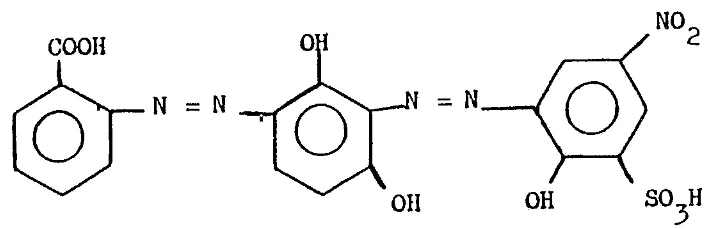 reddish-brown | Cr | Glycerol | Pyridine |
| 57 | 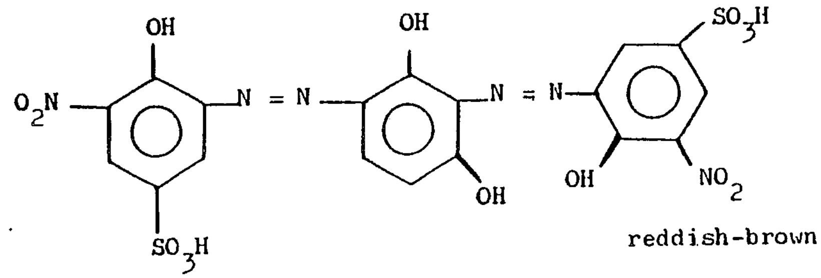 reddish-brown | 2Cr | 2 Glycerol | $2NH_3$ |
| 58 | 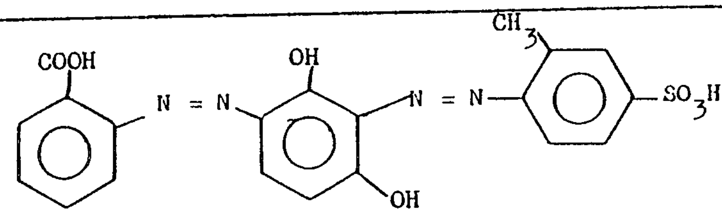 brown/yellow | Cr | Glycerol | $NH_3$ |

Table 1

| Example | Polyazo or Polyazo-azomethinic dyestuff | Metal | L | Z |
|---|---|---|---|---|
| | | | | |
| 59 | 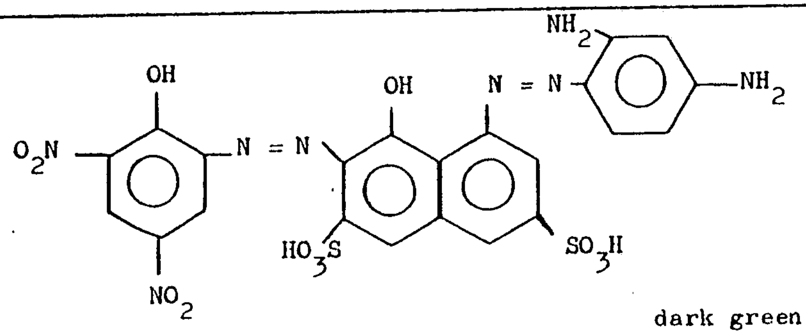 dark green | 2Cr | 2 Glycerol | $2NH_3$ |
| | | | | |

Table 1

| Example | Polyazo or Polyazo-azomethinic dyestuff | Metal | L | Z |
| --- | --- | --- | --- | --- |
| 60 | 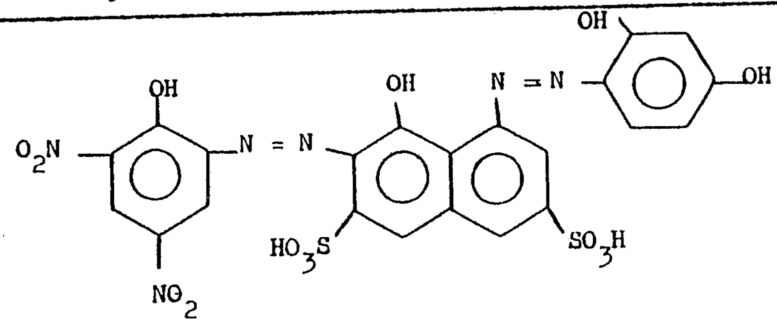 dark green | 2Cr | 2 Acetyl acetone | $2NH_3$ |
| 61 | 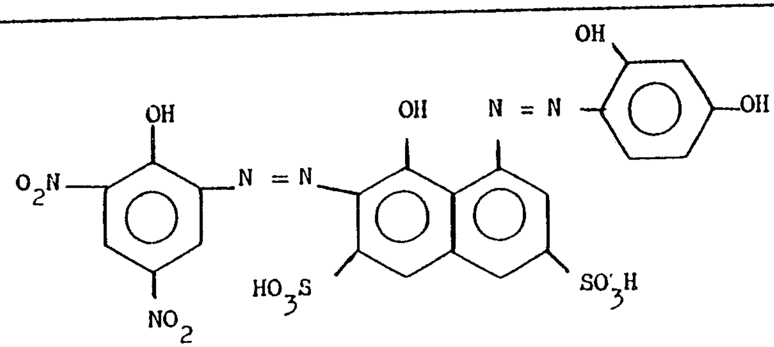 dark green | 2Cr | 2 Glycerol | $2NH_3$ |

Example 62

A previously neutralised sample of suede was dyed according to the following procedure in which the percentages indicated correspond to the weight of dry, pretreated leather:—

0.8% of the metal complex compound of Example 2 was shaken with the leather for 40 minutes in 200% water. 0.2% Of 80% formic acid was added and the mixture was shaken for a further 20 minutes. The bath was emptied and the leather was rinsed. Finishing agents were applied in a separate bath.

An even brown colouration was obtained with excellent penetration into the leather, and having excellent general properties.

**Claims**

1. A metal complex compound of the formula:

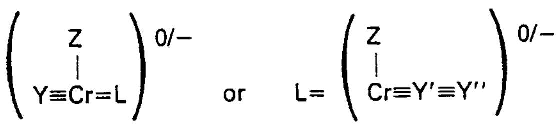

wherein:

Y is the residue of a metallisable polyazo or polyazo-azomethinic dyestuff;

Y' is the residue of a metallisable polyazo or polyazo-azomethinic dyestuff capable of being metallised twice;

L is a bidentate chelating agent selected from beta-diketones, 1:2-diols, 1:3-diols, ortho-hydroxy-aldehydes, beta-hydroxycarboxylic acids, o-diphenols and peri-hydroxyquinones;

Z is a neutral monofunctional ligand;

Y'' is 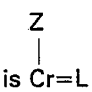 or Cr≡X; and

X is the residue of metallisable azo or azo-methinic dyestuff.

2. A metal complex compound according to Claim 1 wherein the bidentate chelating agent, L, is selected from acetylacetone, benzoylacetone, glycerol, 2-methoxyphenol and propylene-1,2-diol.

3. A metal complex compound according to Claim 1 or Claim 2 wherein the neutral monofunctional ligand, Z, is ammonia or an aliphatic or aromatic amine or a mixture of these with water.

4. A metal complex compound according to Claim 3 wherein the neutral monofunctional ligand, Z, is selected from ammonia, pyridine, ethylamine, ethanolamine and a mixture of any of these with water.

5. A metal complex according to any one of Claims 1 to 4 containing from 1 to 5 sulphonic acid groups.

6. A metal complex compound according to Claim 5 containing from 1 to 3 sulphonic acid groups.

7. A method of preparing a metal complex compound according to Claim 1 which comprises reacting, in an aqueous medium, the bidentate chelating agent, L, with the cationic 1/1 chromium complex of the polyazo or polyazo-azomethinic dyestuff forming the residue Y or Y' in the presence of the neutral monofunctional ligand, Z.

8. A method of dyeing leather which comprises treating the leather with an aqueous solution of a dye according to any one of Claims 1 to 6.

**Patentansprüche**

1. Metallkomplexverbindung der Formel

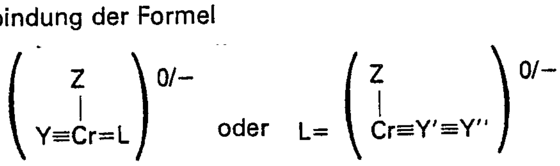

worin

Y für den Rest eines metallisierbaren Polyazo- oder Polyazo-azo-methin-Farbstoffs steht;

Y' für den Rest eines metallisierbaren Polyazo- oder Polyazo-azo-methin-Farbstoffs, der zweifach metallisiert werden kann, steht;

L für ein zweizähniges Chelatisierungsmittel steht, das ausgewählt ist aus beta-Diketonen, 1,2-Diolen, 1,3-Diolen, ortho-Hydroxyaldehyden, beta-Hydroxycarbonsäuren, ortho-Diphenolen und peri-Hydroxychinonen;

Z für einen neutralen monofunktionellen Liganden steht;

Y'' für 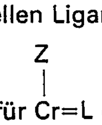 oder Cr≡X steht; und

X für den Rest eines metallisierbaren Azo- oder Azo-methin-Farbstoffs steht.

2. Metallkomplexverbindung nach Anspruch 1, bei welcher das zweizähnige Chelatisierungsmittel L ausgewählt ist aus Acetylaceton, Benzoylaceton, Glycerin, 2-Methoxyphenol und Propylen-1,2-diol.

3. Metallkomplexverbindung nach Anspruch 1 oder 2, bei welcher der neutrale monofunktionelle Ligand Z aus Ammoniak oder einem aliphatischen oder aromatischen Amin oder einem Gemisch derselben mit Wasser besteht.

4. Metallkomplexverbindung nach Anspruch 3, bei welcher der neutrale monofunktionelle Ligand Z ausgewählt ist aus Ammoniak, Pyridin, Ethylamin, Ethanolamin und einem Gemisch aus einem oder mehreren derselben mit Wasser.

5. Metallkomplex nach einem der Ansprüche 1 bis 4, welcher 1 bis 5 Sulfonsäuregruppen enthält.

6. Metallkomplexverbindung nach Anspruch 5, welche 1 bis 3 Sulfonsäuregruppen enthält.

7. Verfahren zur Herstellung einer Metallkomplexverbindung nach Anspruch 1, bei welchem in einem wäßrigen Medium das zweizähnige Chelatisierungsmittel L mit dem kationischen 1/1-Chromkomplex des den Rest Y oder Y′ bildenden Polyazo- oder Polyazo-azo-methin-Farbstoffs in Gegenwart des neutralen monofunktionellen Liganden Z umgesetzt wird.

8. Verfahren zum Färben von Leder, bei welchem das Leder mit einer wäßrigen Lösung des Farbstoffs nach einem der Ansprüche 1 bis 6 behandelt wird.

**Revendications**

1. Composé complexe de métal de formule:

$$\left(\begin{array}{c} Z \\ | \\ Y{\equiv}Cr{=}L \end{array}\right)^{0/-} \quad \text{ou} \quad L{=}\left(\begin{array}{l} Z \\ | \\ Cr{\equiv}Y'{\equiv}Y'' \end{array}\right)^{0/-}$$

dans lequel

Y est le résidu d'un colorant polyazoïque ou polyazo-azométhinique susceptible de métallation;

Y′ est le résidu d'un colorant polyazoïque ou polyazo-azométhinique susceptible de métallation et capable de subir deux fois une métallation;

L est un agent chélateur bidenté choisi entre des bêta-dicétones, des 1:2-diols, des 1:3-diols, des ortho-hydroxyaldéhydes, des acides bêta-hydroxycarboxyliques, des o-diphénols et des périhydroxyquinones,

Z est un ligand monofonctionnel neutre;

$$Y'' \text{ représente } \begin{array}{c} Z \\ | \\ Cr{=}L \end{array} \text{ ou } Cr{\equiv}X\text{; et}$$

X est le résidu d'un colorant azoïque ou azométhinique susceptible de métallation.

2. Composé complexe de métal suivant la revendication 1, dans lequel l'agent chélateur bidenté L est choisi entre l'acétylacétone, le benzoylacétone, le glycérol, le 2-méthoxyphénol et le propylène-1,2-diol.

3. Composé complexe de métal suivant la revendication 1 ou la revendication 2, dans lequel le ligand monofonctionnel neutre Z est l'ammoniac ou une amine aliphatique ou aromatique ou un mélange de ces amines avec de l'eau.

4. Composé complexe métallique suivant la revendication 3, dans lequel le ligand monofonctionnel neutre Z est choisi entre l'ammoniac, la pyridine, l'éthylamine, l'éthanolamine et un mélange de n'importe laquelle de ces amines avec de l'eau.

5. Complexe métallique suivant l'une quelconque des revendications 1 à 4, contenant 1 à 5 groupes acide sulfonique.

6. Composé complexe métallique suivant la revendication 5, contenant 1 à 3 groupes acide sulfonique.

7. Procédé de préparation d'un composé complexe métallique suivant la revendication 1, qui consiste à faire réagir, dans un milieu aqueux, l'agent chélateur bidenté L, avec le complexe de chrome cationique à 1/1 du colorant polyazoïque ou polyazo-azométhinique formant le résidu Y ou Y′ en présence du ligand monofonctionnel neutre Z.

8. Procédé de teinture du cuir, qui consiste à traiter le cuir avec une solution aqueuse d'un colorant suivant l'une quelconque des revendications 1 à 6.